# EUROPÄISCHE PATENTANMELDUNG

(11) **EP 1 327 814 A2**
(43) Veröffentlichungstag der Anmeldung: **16.07.2003**
(21) Anmeldenummer: 03000302.4
(22) Anmeldetag: 09.01.2003
(51) Int. Cl.: F16M 11/04

(54) **Gelenkstativ**

(30) Priorität: 11.01.2002 DE 20200370 U
(71) Anmelder: Hörger und Gässler OHG, 89567 Sontheim (DE)
(72) Erfinder: Hörger, Hans, 89567 Sontheim (DE)
(74) Vertreter: Lorenz, Werner, Dr.-Ing.

(57) **Zusammenfassung**

Ein Gelenkstativ ist mit wenigstens zwei Armen(2,3,4), welche über wenigstens einen Gelenkzapfen miteinander verbunden sind, mit einer Hydraulikleitung, die durch wenigstens einen Teil der Länge der wenigstens zwei Arme (2,3,4) sowie durch den wenigstens einen Gelenkzapfen verläuft, und mit einer Betätigungseinrichtung (9), welche einen auf die Hydraulikleitung wirkenden Kolben (18) aufweist, versehen. Durch Aufbringen von Druck auf die Hydraulikleitung mittels des Kolbens (18) sind die wenigstens zwei Arme( 2,3,4) im Bereich des wenigstens einen Gelenkzapfens in einer gegeneinander verspannten Stellung gehalten. Die Betätigungseinrichtung (9) weist ein mit einer Kraft mechanisch auf den Kolben (18) wirkendes Spannmittel (20) und ein entgegen der Kraft des Spannmittels (20) auf den Kolben (18) wirkendes, mechanisches Entlastungsmittel (21) auf, welches bei Betätigung die auf den Kolben (18) wirkende Kraft derart löst, daß die wenigstens zwei Arme (2,3,4) gegeneinander verdrehbar sind.

## Beschreibung

Die Erfindung betrifft ein Gelenkstativ mit wenigstens zwei Armen, welche über wenigstens einen Gelenkzapfen miteinander verbunden sind, nach der im Oberbegriff von Anspruch 1 näher definierten Art.

Ein gattungsgemäßes Gelenkstativ ist aus der DE 299 06 642 U1 bekannt. Das dort beschriebene pneumatische Spannen bzw. Lösen der Arme des Gelenkstativs ist eine Weiterentwicklung des prinzipiell aus der DE 40 11 188 C2 bekannten Gelenkstativs, dessen Arme durch Drehen einer meist in einem Gelenkzapfen angeordneten Schraube, welche Druck auf das in der Hydraulikleitung sich befindliche Hydraulikmedium ausübt, miteinander verspannt wurden.

Zwar wurde mit Hilfe der neuartigen pneumatischen Spannung des Gelenkstativs gemäß der DE 299 06 642 U1 eine erhebliche Vereinfachung der Bedienung erreicht, es ist zum Arbeiten mit diesem Gelenkstativ allerdings stets eine Druckluftquelle oder gegebenenfalls eine Hydraulikquelle erforderlich, so daß sich in der Praxis lediglich begrenzte Einsatzmöglichkeiten für dieses Gelenkstativ ergeben.

Es ist daher Aufgabe der vorliegenden Erfindung, ein Gelenkstativ zu schaffen, dessen Arme unabhängig von wenig verbreiteten externen Versorgungseinrichtungen einfach und sicher miteinander verspannt und voneinander gelöst werden können.

Erfindungsgemäß wird diese Aufgabe durch die im kennzeichnenden Teil von Anspruch 1 genannten Merkmale gelöst.

Durch das mechanisch auf den Kolben wirkende Spannmittel und das entgegen der Kraft des Spannmittels wirkende, ebenfalls mechanisch ausgeführte Entlastungsmittel ist es möglich, den auf die Hydraulikleitung wirkenden Kolben in sehr einfacher und insbesondere unabhängiger Art und Weise zu betätigen, so daß die Arme des erfindungsgemäßen Gelenkstativs sehr einfach miteinander verspannt und insbesondere sehr einfach voneinander gelöst werden können.

Durch Betätigen des Entlastungsmittels kann nämlich die Kraft von dem Kolben gelöst werden, so daß dieser nicht mehr auf die Hydraulikleitung wirkt und die beiden Arme in einfacher Weise gegeneinander bewegt werden können.

Eine kontinuierlich auf den Kolben wirkende Kraft kann mit sehr einfachen Mitteln dadurch erreicht werden, daß in einer vorteilhaften Weiterbildung der Erfindung das Spannmittel als auf den Kolben wirkendes Federelement ausgebildet ist.

Wenn in einer weiteren vorteilhaften Ausgestaltung der Erfindung das Entlastungsmittel als entgegen der Kraft des Spannmittels wirkendes Zugkabel ausgebildet ist, so kann auch das Entlastungsmittel sehr einfach betätigt werden.

In diesem Zusammenhang ist es besonders vorteilhaft, wenn das Entlastungsmittel mit einem Fußschalter verbunden ist, da bei einer solchen Ausführungsform ein Benutzer des erfindungsgemäßen Gelenkstativs beim Betätigen des Entlastungsmittels beide Hände zum Einstellen der Arme des Gelenkstativs zur Verfügung hat.

Ein schnelleres Absenken des Drucks in der Hydraulikleitung kann in einer vorteilhaften Weiterbildung der Erfindung dadurch erreicht werden, daß zusätzlich zu dem Entlastungsmittel ein entgegen der Kraft des Spannmittels auf den Kolben wirkendes Federelement vorgesehen ist. Ein solches Federelement unterstützt nämlich vorteilhafterweise die schnelle Rückstellung des Kolbens, was zu einem schnelleren Absenken des Drucks in der Hydraulikleitung und auf diese Weise zu einer schnelleren Verdreh- bzw. Einstellbarkeit der Arme gegeneinander führt.

Eine andere Lösung der mechanischen Verstellung des Kolbens, die allerdings eine elektrische Versorgung erfordert, kann darin bestehen, daß das Spannmittel und das Entlastungsmittel durch eine mechanisch auf den Kolben wirkende, elektrische Antriebseinrichtung gebildet sind. Diese Lösung bietet ebenfalls erhebliche Vorteile, da die zur Versorgung der elektrischen Antriebseinrichtung erforderlichen Mittel sehr viel verbreiteter sind als beispielsweise pneumatische Versorgungsmittel.

In einer weiteren vorteilhaften Ausgestaltung der Erfindung kann eine verstellbare Drosseleinrichtung zum Verringern des Drucks in der Hydraulikleitung vorgesehen sein. Durch die Verringerung des Drucks in der Hydraulikleitung mittels einer solchen Drosseleinrichtung kann es möglich sein, auch im an sich gespannten Zustand des Gelenkstativs die beiden Arme in gewissen Grenzen gegeneinander zu verdrehen.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: ein erfindungsgemäßes Gelenkstativ;
- Fig. 2: eine vergrößerte Darstellung der Betätigungseinrichtung des Gelenkstativs aus Fig. 1; und
- Fig. 3: einen Schnitt nach der Linie III-III aus Fig. 2.

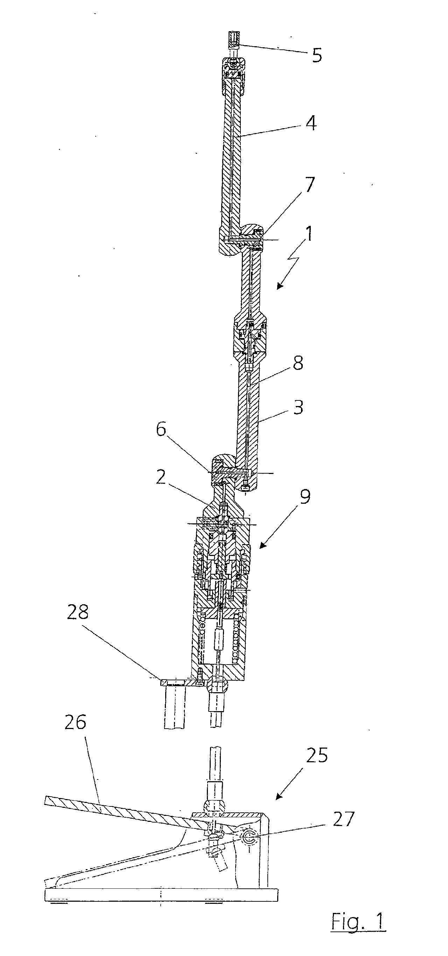

Fig. 1 zeigt ein Gelenkstativ 1, welches im vorliegenden Fall drei zueinander verstellbare Arme aufweist, nämlich einen inneren, kurzen Arm 2, einen mittleren Arm 3 und einen äußeren Arm 4, und dessen Aufbau und Funktionsweise an sich aus der DE 40 11 188 C2 bekannt ist. An dem äußeren Arm 4 ist ein Halteelement 5 angebracht, an welchem Meßuhren, medizinische Geräte oder dergleichen befestigt werden können. Der äußere Arm 4 ist mit dem mittleren Arm 3 über einen ersten Gelenkzapfen 6 verbunden. In ähnlicher Weise ist auch der mittlere Arm 3 mit dem inneren Arm 2 über einen weiteren Gelenkzapfen 7 gelenkig verbunden.

Durch die Arme 2, 3 und 4 sowie durch die Gelenkzapfen 6 und 7 verläuft eine Hydraulikleitung 8, in welcher ein nicht dargestelltes Hydraulikmedium geführt ist, das zum Verklemmen bzw. Verspannen der Arme 2, 3 und 4 in an sich bekannter Weise dient. Wenn das Hydraulikmedium unter Druck gesetzt ist wird, so werden die Arme 2, 3 und 4 an den Gelenkzapfen 7 miteinander verspannt. Um das Hydraulikmedium, z.B. Öl, mit Druck zu beaufschlagen und auf diese Weise die Klemmung zu erreichen, ist an dem unteren Arm 2 eine Betätigungseinrichtung 9 angebracht. In nicht dargestellter Weise könnte die Betätigungseinrichtung 9 auch an jedem anderen Punkt der Hydraulikleitung 8 angreifen.

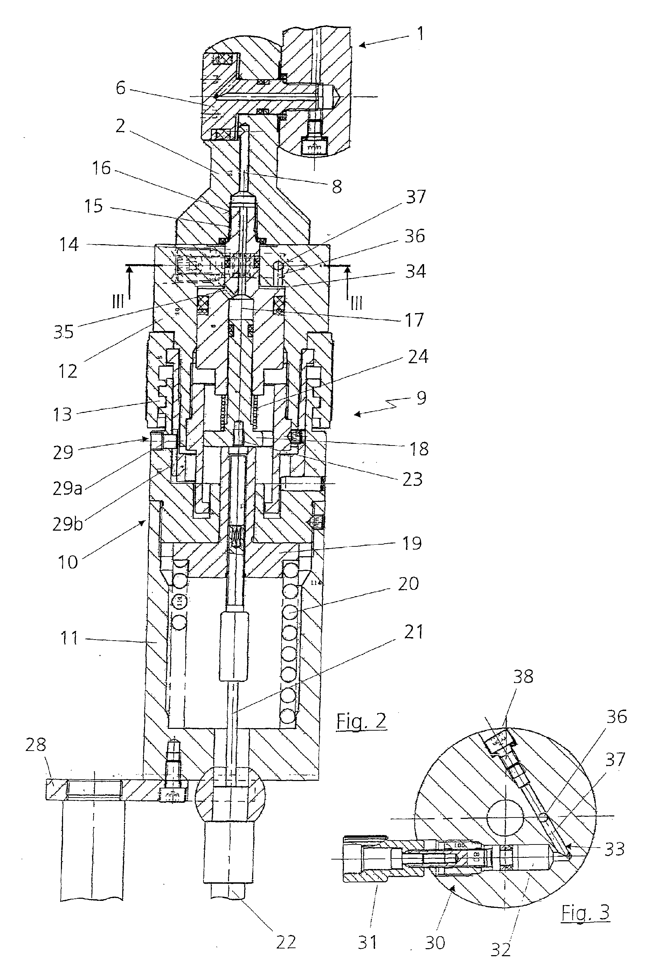

Die in Fig. 2 detailliert dargestellte Betätigungseinrichtung 9 weist ein Gehäuse 10 mit im wesentlichen zwei Gehäuseteilen, nämlich einem oberen Gehäuseteil 11 und einem unteren Gehäuseteil 12 auf, die über ein Flachgewinde 13 miteinander verbunden sind. Diese Verbindung mittels des Flachgewindes 13 dient dazu, das obere Gehäuseteil 12 mit den daran angebrachten Armen 2, 3 und 4 von dem unteren Gehäuseteil 11 trennen zu können und auf diese Weise ein Reinigen bzw. Sterilisieren der abgenommenen Teile zu erreichen, was insbesondere bei medizinischen Anwendungen sinnvoll sein kann. Die beiden Gehäuseteile 11 und 12 bestehen wiederum aus mehreren Einzelteilen, was lediglich montagetechnische Gründe hat, weshalb hier nicht näher darauf eingegangen wird.

Das obere Gehäuseteil 12 ist mit dem unteren Arm 2 über einen Stellkolben 14 verbunden und zwar dadurch, daß ein Gewindebolzen 15 des Stellkolbens 14 in eine Gewindebohrung 16 des Armes 2 eingeschraubt ist. Durch den Stellkolben 14 verläuft ebenfalls die Hydraulikleitung 8 und endet im Inneren desselben in einer Druckkammer 17, in welcher von der gegenüberliegenden Seite ein Kolben 18 eingeschoben ist.

Auf den Kolben 18 wirkt ein auf der gegenüberliegenden Seite der Druckkammer 17 angeordneter Druckbolzen 19, der von einem in diesem Falls als Federelement ausgebildeten, Spannmittel 20 mechanisch mit Kraft beaufschlagt wird. Die Kraft des Spannmittels 20, welches sich auf seiner gegenüberliegenden Seite an dem Gehäuse 10 abstützt, drückt den Druckbolzen 19 auf den Kolben 18, der hierdurch wiederum in Richtung der Druckkammer 17 geschoben wird und auf diese Weise Druck auf das in der Hydraulikleitung 8 sich befindliche Hydraulikmedium aufbringt. Dies bewirkt, wie oben beschrieben, daß die Arme 2, 3 und 4 gegeneinander verspannt werden. In diesem unbetätigten Zustand der Betätigungseinrichtung 9 ist also eine Verstellung des Gelenkstativs 1 nicht möglich.

Um die durch das Spannmittel 20 auf den Kolben 18 wirkende Kraft lösen zu können, ist ein im vorliegenden Fall als Zugkabel ausgebildetes, mechanisch wirkendes Entlastungsmittel 21 vorgesehen, welches in der Art eines Bowdenzugs in einer Hülse 22 geführt ist. Das Entlastungsmittel 21 verläuft im vorliegenden Fall durch den Druckbolzen 19 und ist mittels eines Gewindes 23 an dem Kolben 18 befestigt. Somit kann durch Ziehen an dem Druckkabel 21 eine entgegen der Kraft des Spannmittels 20 wirkende Kraft aufgebracht werden, die den Kolben 18 von der Druckkammer 17 weg bewegt und so eine Ausdehnung des Hydraulikmediums innerhalb der Hydraulikleitung 8 erlaubt. Dies führt dazu, daß der Druck in der Hydraulikleitung 8 abfällt und die Arme 2, 3 und 4 nicht mehr gegeneinander verspannt sind. Somit können die Arme 2, 3 und 4 gegeneinander verdreht und das Gelenkstativ 1 in eine beliebige Position gebracht werden.

Die beschriebene Rückstellung des Kolbens 18 wird durch ein weiteres Federelement 24 unterstützt, welches zwischen dem Stellkolben 14 und dem Kolben 18 angeordnet ist, somit entgegen der Kraft des Spannmittels 20 wirkt und einen schnelleren Druckabfall durch eine zusätzliche Beschleunigung des Kolbens 18 in der Hydraulikleitung 8 unterstützt. Des weiteren verringert das zweite Federelement 24 die zur Betätigung des Entlastungsmittels 21 erforderliche Kraft. In diesem Zusammenhang könnte das Entlastungsmittel 21 auch an dem Druckbolzen 19 befestigt sein, so daß die Entlastung des Kolbens 18 zwar durch das Entlastungsmittel 21 erfolgen würde, die Rückstellung des Kolbens 18 jedoch hauptsächlich von dem Federelement 24 mit Unterstützung des Hydraulikmediums erfolgen würde. Das Federelement 24 könnte auch zwischen dem Druckbolzen 19 und dem Gehäuseteil 11 angeordnet sein, wenn in diesen beiden Bauteilen entsprechende Nuten bzw. Ausnehmungen vorgesehen wären.

Sobald das Entlastungsmittel 21 bzw. die Betätigungseinrichtung 9 nicht mehr betätigt wird, drückt das Spannmittel bzw. Federelement 20, dessen Federkonstante wesentlich höher als diejenige des Federelementes 24 ist, den Druckbolzen 19 wieder auf den Kolben 18, wodurch sich in der Hydraulikleitung 8 wiederum ein Druck aufbaut, so daß die Arme 2, 3 und 4 gegeneinander verspannt werden. Der Vorgang des Entlastens des Kolbens 18, der Verstellung der Arme 2, 3 und 4 und des anschließenden Spannens derselben kann nur wenige Sekunden in Anspruch nehmen, so daß ein sehr schnelles Ausrichten des Gelenkstativs 1 möglich ist.

Zur Betätigung des Entlastungsmittels 21 ist im vorliegenden Fall ein in Fig. 1 dargestellter Fußschalter 25 vorgesehen, der einen Hebel 26 aufweist, welcher um einen Drehpunkt 27 beweglich angebracht ist. Wenn der Hebel 26 von einem Bediener mit dem Fuß betätigt wird, so dreht er sich um den Drehpunkt 27 in die gestrichelt dargestellte Position und bringt eine Zugkraft auf das Entlastungsmittel 21 auf, so daß sich letztendlich, wie oben beschrieben, der Kolben 18 von der Druckkammer 17 entfernt.

Die Bedienung des Gelenkstativs 1 geht also folgendermaßen vor sich: Die zunächst miteinander verspannten Arme 2, 3 und 4 werden durch Betätigen des Fußschalter 25 gelöst. Während der Fußschalter 25 gedrückt ist, werden die Arme 2, 3 und 4 in der gewünschten Weise gegeneinander ausgerichtet. Dann wird der Fußschalter 25 gelöst und das Gelenkstativ 1 befindet sich wieder im gespannten Zustand.

Selbstverständlich wäre auch eine andere Betätigung des Entlastungsmittels 21 denkbar, beispielsweise mit einem sich an dem Gehäuseteil 11 abstützenden Hebel oder dergleichen. Die Betätigung mittels des Fußschalters 25 ermöglicht der Bedienperson jedoch, beide Hände zur Einstellung des Gelenkstativs 1 zu benutzen. Auch ein Einrasten eines solchen Hebels für das Entlastungsmittel 21 ist möglich, beispielsweise um trotz der Handbedienung desselben beide Hände frei zu behalten.

An dem Gehäuseteil 11 ist des weiteren ein Befestigungselement 28 angebracht, mit dem das Gelenkstativ 1 beispielsweise an einem Tisch oder ähnlichem angebracht werden kann. Selbstverständlich sind auch hier andere Arten der Befestigung des Gelenkstativs 1 an einem starren Bauteil denkbar.

Zwischen den beiden Gehäuseteilen 11 und 12 ist im vorliegenden Fall eine Verdrehsicherung 29 in Form eines oder mehrerer am Umfang des unteren Gehäuseteils 11 oder des oberen Gehäuseteils 12 angeordneter Bolzen 29a vorgesehen, die in nicht dargestellte Schlitze bzw. Nuten 29b am jeweiligen Gegenstück eingreifen und auf diese Weise ein positionsgenaues Montieren der beiden Gehäuseteile 11 und 12 gegeneinander erlauben. Insbesondere im medizinischen Bereich, wo eine hohe Positioniergenauigkeit erforderlich ist und häufig ungeübte Bedienpersonen mit dem Gelenkstativ 1 arbeiten, ist eine solche Verdrehsicherung 29 sinnvoll.

Fig. 3 zeigt einen Schnitt durch eine Drosseleinrichtung 30, welche zum Verringern des Drucks in der Hydraulikleitung 8 dient. Die Drosseleinrichtung 30 weist eine Stellschraube 31, eine in dem oberen Gehäuseteil 12 sich befindliche Druckkammer 32, deren Volumen durch Verdrehen der Stellschraube 31 verändert werden kann, sowie eine Verbindungsleitung 33 von der Druckkammer 17 zu der Druckkammer 32 auf. Die Verbindungsleitung 33 besteht dabei aus mehreren einzelnen Leitungen, nämlich einer ersten, von der Druckkammer 17 zu einem Ringspalt 34 zwischen dem Stellkolben 14 und dem oberen Gehäuseteil 12 führenden Teilleitung 35, einer parallel zu der Hydraulikleitung 8 von dem Ringspalt 34 in dem Gehäuseteil 12 verlaufenden zweiten Teilleitung 36 sowie einer im wesentlichen rechtwinklig zu der zweiten Teilleitung 36 verlaufenden und in die Druckkammer 32 mündenden dritten Teilleitung 37. Die dritte Teilleitung 37 wird aus Fertigungsgründen vom Außenumfang des oberen Gehäuseteils 12 zu der zweiten Teilleitung 36 gebohrt und ist aus Gründen der Abdichtung mit einem Stopfen 38 verschlossen.

Wird nun durch Verstellen der Stellschraube 31 das Volumen der Druckkammer 32 vergrößert, so kann sich das in der Hydraulikleitung 8 und der Druckkammer 17 befindliche Hydraulikmedium weiter ausbreiten, nämlich in die Druckkammer 32, wodurch der Druck der gesamten Hydraulikleitung 8 absinkt, also auch im Bereich der Gelenkzapfen 6 und 7, so daß die Arme 2, 3 und 4 mit einer geringeren Kraft gegeneinander verstellt werden. Auf diese Weise ist eine gewisse Bewegung der Arme 2, 3 und 4 gegeneinander auch im gespannten Zustand des Gelenkstativs 1 möglich.

Das Spannmittel 20 wird allgemein durch eine Kraftquelle gebildet, d.h. es kann sich auch um ein starres Gebilde handeln, das den Kolben 18 in Längsrichtung verschiebt, um das Hydraulikmedium unter Druck zu setzen bzw. den Druck zu lösen. In diesem Zusammenhang kann gegebenenfalls auch auf den Druckkolben 19 verzichtet werden und das Spannmittel könnte direkt auf den Kolben 18 wirken.

Des weiteren kann in nicht dargestellter Weise der Kolben 18 auch durch eine mechanisch auf den Kolben 18 wirkende, elektrische Antriebseinrichtung in Längsrichtung verstellt werden. Zwar wird für eine solche elektrische Antriebseinrichtung eine entsprechende elektrische Versorgung benötigt, die hierfür erforderlichen Mittel sind jedoch sehr verbreitet.

## Patentansprüche

1. Gelenkstativ mit wenigstens zwei Armen, welche über wenigstens einen Gelenkzapfen miteinander verbunden sind, mit einer Hydraulikleitung, die durch wenigstens einen Teil der Länge der wenigstens zwei Arme sowie durch den wenigstens einen Gelenkzapfen verläuft, und mit einer Betätigungseinrichtung, welche einen auf die Hydraulikleitung wirkenden Kolben aufweist, wobei durch Aufbringen von Druck auf die Hydraulikleitung mittels des Kolbens die wenigstens zwei Arme im Bereich des wenigstens einen Gelenkzapfens in einer gegeneinander verspannten Stellung gehalten sind,
**dadurch gekennzeichnet, daß**
die Betätigungseinrichtung (9) ein mit einer Kraft mechanisch auf den Kolben (18) wirkendes Spannmittel (20) und ein entgegen der Kraft des Spannmittels (20) auf den Kolben (18) wirkendes, mechanisches Entlastungsmittel (21) aufweist, welches bei Betätigung die auf den Kolben (18) wirkende Kraft derart löst, daß die wenigstens zwei Arme (2,3,4) gegeneinander verdrehbar sind.

2. Gelenkstativ nach Anspruch 1,
**dadurch gekennzeichnet, daß**
das Spannmittel (20) als auf den Kolben (18) wirkendes Federelement ausgebildet ist.

3. Gelenkstativ nach Anspruch 1 oder 2,
**dadurch gekennzeichnet, daß**
das Entlastungsmittel (21) als entgegen der Kraft des Spannmittels (20) wirkendes Zugkabel ausgebildet ist.

4. Gelenkstativ nach Anspruch 3,
**dadurch gekennzeichnet, daß**
das Entlastungsmittel (21) mit einem Fußschalter (25) verbunden ist.

5. Gelenkstativ nach einem der Ansprüche 1 bis 4,
**dadurch gekennzeichnet, daß**
zusätzlich zu dem Entlastungsmittel (21) ein entgegen der Kraft des Spannmittels (20) auf den Kolben (18) wirkendes Federelement (24) vorgesehen ist.

6. Gelenkstativ nach den Ansprüchen 2 und 5,
**dadurch gekennzeichnet, daß**
das als Federelement ausgebildete Spannmittel (20) eine höhere Federkonstante als das in Richtung des Entlastungsmittels (21) wirkende Federelement (24) aufweist.

7. Gelenkstativ nach einem der Ansprüche 1 bis 6,
**dadurch gekennzeichnet, daß**
das Spannmittel (20) über einen Druckbolzen (19) auf den Kolben (18) wirkt.

8. Gelenkstativ nach Anspruch 1,
**dadurch gekennzeichnet, daß**
das Spannmittel (20) und das Entlastungsmittel (21) durch eine mechanisch auf den Kolben (18) wirkende, elektrische Antriebseinrichtung gebildet sind.

9. Gelenkstativ nach einem der Ansprüche 1 bis 7,
**dadurch gekennzeichnet, daß**
der Kolben (18) in einem Gehäuse (10) angeordnet ist.

10. Gelenkstativ nach Anspruch 9,
**dadurch gekennzeichnet, daß**
das Gehäuse (10) wenigstens zwei lösbar miteinander verbundene Gehäuseteile (11,12) aufweist.

11. Gelenkstativ nach Anspruch 10,
**dadurch gekennzeichnet, daß**
zwischen den wenigstens zwei Gehäuseteilen (11,12) eine Verdrehsicherung (29) vorgesehen ist.

12. Gelenkstativ nach Anspruch 9, 10 oder 11,
**dadurch gekennzeichnet, daß**
das Gehäuse (10) mit einem der Arme (2) über einen in dem Gehäuse (10) angeordneten Stellkolben (14) verbunden ist.

13. Gelenkstativ nach Anspruch 12,
**dadurch gekennzeichnet, daß**
die Hydraulikleitung (8) durch den Stellkolben (14) verläuft.

14. Gelenkstativ nach einem der Ansprüche 1 bis 13,
**dadurch gekennzeichnet, daß**
eine Drosseleinrichtung (30) zum Verringern des Drucks in der Hydraulikleitung (8) vorgesehen ist.
